**Europäisches Patentamt**

**European Patent Office**

**Office européen des brevets**

(19)

(11) Publication number : **0 357 491 B1**

# EUROPEAN PATENT SPECIFICATION

(12)

(45) Date of publication of patent specification :
16.06.93 Bulletin 93/24

(51) Int. Cl.⁵ : **C04B 35/56,** C04B 37/00

(21) Application number : **89402327.4**

(22) Date of filing : **23.08.89**

(54) **Method for the preparation of an integrally conjoined sintered body of silicon carbide.**

(30) Priority : **30.08.88 JP 215482/88**

(43) Date of publication of application :
**07.03.90 Bulletin 90/10**

(45) Publication of the grant of the patent :
**16.06.93 Bulletin 93/24**

(84) Designated Contracting States :
**DE FR GB NL**

(56) References cited :
EP-A- 0 051 535
DE-A- 3 311 553
GB-A- 2 137 975
DERWENT PUBLICATIONS, LTD., LONDON,
GB; DATABASE WPIL, ACCESSION No.
85-194387, DW8532; & JP-A-60122774 (NISSAN
MOTOR KK) 01.07.1985

(56) References cited :
DERWENT PUBLICATIONS, LTD., LONDON,
GB; DATABASE WPIL, ACCESSION No.
84-136611, DW8422; & JP-A-59069479 (NISSAN
MOTOR KK) 19.04.1984
DERWENT PUBLICATIONS, LTD., LONDON,
GB; DATABASE WPIL, ACCESSION No.
83-755319, DW8336; & JP-A-58126401 (NGK
SPARK PLUG KK) 27.07.1983

(73) Proprietor : **Shin-Etsu Chemical Co., Ltd.**
**6-1, Otemachi 2-chome**
**Chiyoda-ku Tokyo 100 (JP)**

(72) Inventor : **Kamei, Kazuaki**
**1-1-18, Katsumi**
**Fukui-shi Fukui-ken (JP)**
Inventor : **Hamaya, Noriaki**
**1-9, Kitano-cho 1-chome**
**Sabae-shi Fukui-ken (JP)**

(74) Representative : **Armengaud Ainé, Alain et al**
**Cabinet ARMENGAUD AINE 3 Avenue**
**Bugeaud**
**F-75116 Paris (FR)**

EP 0 357 491 B1

## Description

BACKGROUND OF THE INVENTION

The present invention relates to a method for the preparation of an integrally conjoined sintered body of silicon carbide. More particularly, the invention relates to a method for the preparation of an integral sintered body of silicon carbide, which has a so complicated form as not to be shaped as an integral body by molding, by conjoining together two or more parts each having a relatively simple form into an integrally conjoined body.

Silicon carbide is a recently highlighted material used in the form of a refractory sintered body of high performance in respect of the high heat resistance as well as high mechanical strengths and stability against the influences of the ambient atmosphere even at high temperatures. One of the problems in the sintered bodies of silicon carbide is that silicon carbide is a material of poor workability so that a sintered body having a complicated form, such as a flanged tube used as a protecting tube of a thermocouple, can hardly be manufactured with an industrially satisfactory efficiency.

A sintered body of silicon carbide having a relatively complicated form is prepared in the prior art by sintering a green body of the desired complicated form prepared by the method of slip casting, injection molding and the like. This method, however, has a limitation in respect of the form of the sintered body. The method of compression molding in a metal mold or by using a rubber press also has a limitation in the applicability thereof to the preparation of a complicated form. Accordingly, a method widely undertaken is to effect a machine working on a block-like body shaped by molding either before or after sintering.

It has also been proposed that a sintered body of silicon carbide having a complicated form is prepared by conjoining together two or more pieces of sintered silicon carbide each having a relatively simple form separately prepared in advance. According to the teaching in Japanese Patent Kokai 52-3600, the integral conjoining of sintered silicon carbide parts is performed by adhesively bonding the parts with a viscid bonding agent and reactively sintering the bonded pieces in contact with molten silicon by heating in an atmosphere of an inert gas to form recrystallized silicon carbide impregnated with silicon at the bonding interface. Further, Japanese Patent Kokai 60-122774 teaches that the bonding agent interposed between the sintered silicon carbide parts contains a silicon carbide powder and a carbon powder or a material convertible into carbon by heating and the bonded parts are heated in contact with molten silicon which is reacted with the carbon in the bonding layer to form silicon carbide *in situ*. These prior art methods are not quite satisfactory as a practical method because the bonding strength obtained thereby is not high enough to ensure usability of the thus integrally conjoined sintered body of silicon carbide.

SUMMARY OF THE INVENTION

The present invention, which has been completed as a result of the investigations to provide a novel method for the preparation of an integrally conjoined sintered body of silicon carbide without the above described disadvantages and problems in the prior art methods, comprises the steps of:

(a) shaping at least two powder compact bodies from a mixture of a silicon carbide powder, a carbon powder and a first thermally curable organic resin as a binder;

(b) heating each of the powder compact bodies at a temperature sufficiently high to cure the thermally curable organic resin but not to cause sintering of the silicon carbide into a strengthened shaped body;

(c) bonding the strengthened shaped bodies together with a pasty bonding agent comprising a second thermally curable resin and a carbon powder or a silicon carbide powder into an integrally bonded body;

(d) heating the integrally bonded body at a temperature sufficiently high to cure the second thermally curable resin but not to cause sintering the silicon carbide into an integrally conjoined body; and

(e) heating the integrally conjoined body at a temperature sufficiently high to effect sintering of silicon carbide into an integrally conjoined sintered body of silicon carbide.

BRIEF DESCRIPTION OF THE DRAWING

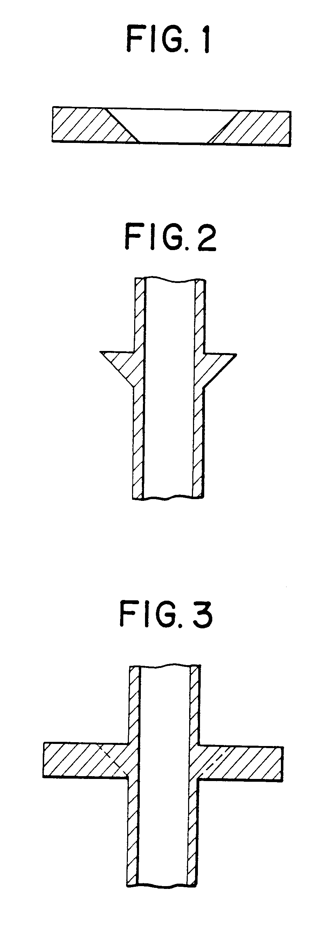

Figures 1 and 2 are each an axial cross sectional view of a flange with a tapered opening and a tubular body with a truncated conical abutment to fit the tapered opening in the flange, respectively. Figure 3 is an axial cross sectional view of the integrally conjoined tube having a flange as prepared from the parts illustrates in Figures 1 and 2.

## DETAILED DESCRIPTION OF THE PREFERRED EMBODIMENTS

As is summarized above, at least two powder compacts or so-called green bodies each having a relatively simple form are prepared in step (a) of the inventive method from a powder mixture of a silicon carbide powder, carbon powder and binder resin and the powder compacts are heat-treated in step (b) to effect thermal curing of the binder resin so as to give strengthened shaped bodies, which are then bonded by using a pasty bonding agent before the bonded body is subjected to a sintering treatment. In this manner, 200 kgf/cm$^2$ or higher bending strength can easily be obtained in the integrally conjoined sintered body of silicon carbide at the conjoining interface.

In step (a) of the inventive method, at least two pieces of powder compacts or green bodies each having a relatively simple form are shaped from a powder mixture. It is of course that each of the powder compacts should have such a form and dimensions that the desired complicated form of the integrated sintered body can be obtained by combining the two parts or more of the powder compacts after the step (b) for strengthening the powder compacts. Accordingly, each of the powder compacts may have the identical form or may have different forms from each other depending on the design of the final sintered body.

The powder mixture which is shaped into the powder compacts is formulated, for example, with from 20 to 90% by weight of a silicon carbide powder having an average particle diameter not exceeding 100 μm, from 5 to 50% by weight of a carbon powder having an average particle diameter not exceeding 1 μm and from 3 to 30% by weight of a binder resin which is prerferably a thermally curable resin such as silicone resins, furan resins, phenol resins, epoxy resins and the like along with optional addition of a small amount of an organic solvent. The powder mixture can be shaped into the powder compacts by any known method including compression molding in a metal mold or by using a rubber press, extrusion molding, injection molding and the like depending on the form of the desired powder compacts.

Needless to say, the thus prepared powder compacts as such have only low mechanical strengths not to withstand handling or further mechanical working. It is essential therefore that the powder compacts are subjected to a heat treatment in step (b) of the inventive method in order to increase the mechanical strengths thereof by the thermal curing of the binder resin. The temperature of heat treatment in this step is accordingly sufficiently high to effect thermal curing of the binder resin. The temperature can be so high as to cause carbonization of the binder resin but not to cause sintering of the siliocn carbide powder. In this regard, the temperature should not exceed about 1000 °C. The strengthened shaped bodies obtained in this manner may have a bending strength of 200 kgf/cm$^2$ or higher to fully withstand handling and further mechanical working. It is sometimes advantageous that the thus prepared strengthened shaped body are mechanically worked with an object to increase the intimacy of the respective parts with each other at the contacting surfaces where bonding is effected in step (c) of the inventive method.

In step (c) of the inventive method, the strengthened shaped bodies prepared in step (b) are combined together by interposing a viscid or pasty bonding agent between the contacting surfaces of the respective shaped bodies. The viscid pasty bonding agent is formulated with from 20 to 90% by weight or, preferably, from 20 to 70% by weight of a thermally curable resin such as silicone resins, phenol resins, furan resins, epoxy resins, polyester resins, melamine resins and the like, from 0 to 30% by weight or, preferably, from 0 to 20% by weight of a carbon powder having an average particle diameter not exceeding 1 μm and from 0 to 60% by weight or, preferably, from 30 to 60% by weight of a silicon carbide powder having an average particle diameter not exceeding 100 μm with addition of a suitable amount of an organic solvent capable of dissolving the thermally curable resin before curing.

The thus combined shaped bodies are then subjected to a heat treatment in step (d) to effect curing of the thermally curable resin in the pasty bonding agent at a temperature sufficiently high to effect curing of the resin or higher but about 1000 °C or lower not to cause sintering of silicon carbide so that the respective parts are integrally conjoined by means of the bonding agent.

In step (e) of the inventive method, the integrally conjoined shaped body obtained in step (d) is subjected to a sintering treatment of the shaped bodies according to a known procedure to give the desired final product. For example, the integrally conjoined shaped body is heated in an atmosphere of vacuum at a temperature of 1500 °C or higher but not exceeding the decomposition temperature of silicon carbide. When the sintering treatment is performed in an atmosphere of a vapor of silicon or by contacting the shaped body with a melt of silicon, the silicon may react with the carbon powder contained in the shaped bodies as well as in the bonding agent to form silicon carbide *in situ* to increase uniformity of the structure at the bonded surfaces so that the layer of the bonding agent can be unified with the base materials to increase the bonding strength. In this manner, the inventive method provides a possibility of obtaining an integrally conjoined sintered body of silicon carbide having a relatively complicated form, in which the bonding strength at the bonded interface approximates the bending strength of the respective part bodies bonded together, in a relatively simple and efficient process.

In the following, examples are given to illustrate the inventive method in more detail but not to limit the scope of the invention in any way.

Example 1.

A powder mixture was prepared by thoroughly blending 45 parts by weight of a silicon carbide powder having an average particle diameter of 5 μm, 30 parts by weight of a carbon powder having an average particle diameter of 1 μm, 15 parts by weight of a phenol resin as a binder resin and 10 parts by weight of methyl alcohol as a solvent of the resin followed by drying and granulation. The thus prepared granules of the powder mixture were shaped, by using a rubber press under a pressure of 1000 kg/cm², into a disc having a diameter of 70 mm and a thickness of 10 mm and a cylindrical tube having an outer diameter of 40 mm, inner diameter of 15 mm and length of 1000 mm. These powder compacts were heated at 500 °C for 60 minutes so that the binder resin was cured to give strengthened shaped bodies which were then mechanically worked with high precision into a flange having a tapered center opening with a largest diameter of 40 mm and a smallest diameter of 20 mm as is illustrated in Figure 1 by the axial cross section and a tube having an outer diameter of 20 mm and a length of 900 mm having a truncated conical abutment having the largest diameter of 40 mm to fit the tapered opening in the flange as is illustrated in Figure 2 by the axial cross section.

Separately, a pasty bonding agent was prepared by blending 21 g of a varnish-like silicone resin (KR 220, a product by Shin-Etsu Chemical Co.) containing about 50% by weight of non-volatile matter and 9 g of a carbon powder having an average particle diameter of about 3 μm and applied to the contacting surfaces of the above mentioned flange and tube, i.e. the side surface of the tapered opening in the flange and the surface of the truncated conical abutment in the tube. After evaporation of the solvent from the pasty bonding agent approximately to dryness, the flange and the tube were combined together as is illustrated in Figure 3 by the axial cross section. The adhesively bonded shaped bodies were then subjected to a heat treatment at 500 °C for 60 minutes so that the silicone resin was cured to give an integrally conjoined shaped body which was subsequently heated at 1550 °C for 2 hours in an atmosphere of vacuum in a furnace while the body was in contact with a melt of silicon to effect reactive sintering. The thus obtained integrally conjoined sintered body of silicon carbide in the form of a flanged tube was cut into test specimens and subjected to the measurement of bending strungth to give a bending strength at the bonded interface of 38 kg/mm² while the bending strength of the part bodies was 53 kg/mm².

Example 2.

Integrally conjoined tubes with a flange of the same dimensions as in Example 1 were prepared in substantially the same manner as in Example 1 except that the pasty bonding agent used in each of the products was prepared by using a phenol resin, which was a 50% by weight solution in acetone, instead of the silicone resin, the same carbon powder as used in Example 1 and a silicon carbide powder having an average particle diameter of about 10 μm each in a weight indicated in the table below in parts by weight with addition of a small amount of methyl alcohol as the solvent. The flanged tubes thus prepared each had a bending strength at the bonded interface as shown in the table.

## Table

| | | | | | | | |
|---|---|---|---|---|---|---|---|
| Pasty bonding agent | Phenol resin, parts | 40 | 40 | 40 | 30 | 50 | 40 |
| | Carbon powder, parts | 20 | 15 | 10 | 10 | 0 | 0 |
| | SiC powder, parts | 40 | 40 | 50 | 50 | 50 | 60 |
| Bending strength, kg/mm² | | 23 | 33 | 34 | 42 | 14 | 25 |

## Claims

1. A method for the preparation of an integrally conjoined sintered body of silicon carbide which comprises

4

the steps of:

(a) shaping at least two powder compact bodies from a mixture of a silicon carbide powder, a carbon powder and a first thermally curable organic resin as a binder;

(b) heating each of the powder compact bodies at a temperature sufficiently high to cure the thermally curable organic resin but not to cause sintering of the silicon carbide into a strengthened shaped body;

(c) bonding the strengthened shaped bodies together with a pasty bonding agent comprising a second thermally curable resin and a powdery ingredient, which is a carbon powder, a silicon carbide powder or a combination thereof, into an integrally bonded body;

(d) heating the integrally bonded body at a temperature sufficiently high to cure the second thermally curable resin but not to cause sintering the silicon carbide into an integrally conjoined body; and

(e) heating the integrally conjoined body at a temperature sufficiently high to effect sintering of silicon carbide into an integrally conjoined sintered body of silicon carbide.

2. The method for the preparation of an integrally conjoined sintered body of silicon carbide as claimed in claim 1 wherein the powder mixture consists of from 20 to 90% by weight of the silicon carbide powder, from 5 to 50% by weight of the carbon powder and from 3 to 30% by weight of the binder.

3. The method for the preparation of an integrally conjoined sintered body of silicon carbide as claimed in claim 1 wherein the pasty bonding agent essentially consists of from 20 to 90% by weight of the thermally curable resin, from 0 to 30% by weight of the carbon powder and from 0 to 60% by weight of the silicon carbide powder.

4. The method for the preparation of an integrally conjoined sintered body of silicon carbide as claimed in claim 3 wherein the pasty bonding agent essentially consists of from 20 to 70% by weight of the thermally curable resin, from 5 to 30% by weight of the carbon powder and from 30 to 60% by weight of the silicon carbide powder.

5. The method for the preparation of an integrally conjoined sintered body of silicon carbide as claimed in claim 1 wherein the second thermally curable resin is selected from the group consisting of phenol resins, epoxy resins, silicone resins, polyester resins, furan resins and melamine resins.

6. The method for the preparation of the integrally conjoined sintered body of silicon carbide as claimed in claim 1 wherein heating of the integrally conjoined body in step (e) is performed while the integrally conjoined body is in contact with molten silicon.

**Patentansprüche**

1. Verfahren zur Herstellung eines integral zusammengesetzten gesinterten Körpers aus Siliciumcarbid, wobei man

(a) mindestens zwei kompakte Körper aus einem Pulver aus einer Mischung aus einem Siliciumcarbidpulver, einem Kohlepulver und einem ersten thermisch härtbaren organischen Harz als Bindemittel formt,

(b) jeden dieser kompakten Körper aus einem Pulver auf eine so hohe Temperatur erhitzt, daß das thermisch härtbare organische Harz gehärtet, jedoch das Silicumcarbid nicht gesintert wird, wobei ein verstärkter geformter Körper erhalten wird,

(c) die verstärkten geformten Körper mit Hilfe eines pastösen Bindemittels, das ein zweites thermisch härtbares Harz und einen pulvrigen Bestandteil, bei dem es sich um ein Kohlepulver, ein Siliciumcarbidpulver oder eine Kombination davon handelt, aufweist, zu einem integral verbundenen Körper verbindet,

(d) den integral verbundenen Körper auf eine solche Temperatur erhöht, daß unter Erhalt eines integral zusammengesetzten Körpers das zweite thermisch härtbare Harz gehärtet wird, während das Siliciumcarbid jedoch nicht gesintert wird, und

(e) den integral zusammengesetzten Körper auf eine solche Temperatur erhitzt, daß das Siliciumcarbid unter Erhalt eines integral zusammengesetzten gesinterten Körpers aus Siliciumcarbid gesintert wird.

2. Verfahren zur Herstellung eines integral zusammengesetzten gesinterten Körpers aus Siliciumcarbid nach Anspruch 1, bei dem die Pulvermischung aus 20 bis 90 Gew.-% Siliciumcarbidpulver, 5 bis 50 Gew.-% Kohlepulver und 3 bis 30 Gew.-% Bindemittel besteht.

**3.** Verfahren zur Herstellung eines integral zusammengesetzten gesinterten Körpers aus Siliciumcarbid nach Anspruch 1, bei dem das pastöse Bindemittel im wesentlichen aus 20 bis 90 Gew.-% thermisch härtbarem Harz, 0 bis 30 Gew.-% Kohlepulver und 0 bis 60 Gew.-% Siliciumcarbidpulver besteht.

**4.** Verfahren zur Herstellung eines integral zusammengesetzten gesinterten Körpers aus Siliciumcarbid nach Anspruch 3, bei dem das pastöse Bindemittel im wesentlichen aus 20 bis 70 Gew.-% thermisch härtbarem Harz, 5 bis 30 Gew.-% Kohlepulver und 30 bis 60 Gew.-% Siliciumcarbidpulver besteht.

**5.** Verfahren zur Herstellung eines integral zusammengesetzten gesinterten Körpers aus Siliciumcarbid nach Anspruch 1, bei dem das zweite thermisch härtbare Harz ausgewählt ist aus der Gruppe bestehend aus Phenolharzen, Expoyharzen, Siliconharzen, Polyesterharzen, Furanharzen und Melaminharzen.

**6.** Verfahren zur Herstellung eines integral zusammengesetzten gesinterten Körpers aus Siliciumcarbid nach Anspruch 1, bei dem man den integral zusammengesetzten Körper in Stufe (e) erhitzt, während der integral zusammengesetzte Körper mit geschmolzenem Silicium in Kontakt ist.

**Revendications**

**1.** Procédé pour la production d'un corps céramique fritté, intégralement assemblé en carbure de silicium qui comprend les étapes consistant à :

a) conformer au moins deux corps compacts de poudre à partir d'un mélange de poudre de carbure de silicium, d'une poudre de carbone et d'une première résine organique thermo-durcissable en tant que liant;

b) chauffer chacun des corps compacts de poudre à une température suffisamment élevée pour durcir la résine organique thermo-durcissable mais non pour provoquer le frittage du carbure de silicium en un corps conformé renforcé;

c) lier ensemble les corps conformés renforcés avec un agent de liaison pâteux comprenant une seconde résine thermo-durcissable et un ingrédient en poudre, qui est une poudre de carbone, une poudre de carbure de silicium ou une combinaison de telles poudres, pour obtenir un corps intégralement lié;

d) chauffer le corps intégralement lié à une température suffisamment élevée pour durcir la seconde résine thermo-durcissable mais non pour provoquer le frittage du carbure de silicium en un corps intégralement assemblé et,

e) chauffer le corps intégralement assemblé à une température suffisamment élevée pour effectuer le frittage du carbure de silicium en un corps fritté intégralement assemblé de carbure de silicium.

**2.** Procédé pour la préparation d'un corps fritté intégralement assemblé de carbure de silicium selon la revendication 1, dans lequel le mélange de poudres comprend de 20 à 90 % en poids de poudre de carbure de silicium, de 5 à 50 % en poids de poudre de carbone et de 3 à 30 % en poids de liant.

**3.** Procédé pour la préparation d'un corps fritté intégralement assemblé de carbure de silicium selon la revendication 1 dans lequel l'agent liant pâteux comprend essentiellement de 20 à 90 % en poids de la résine thermodurcissable, de 0 à 30 % en poids de la poudre de carbone et de 0 à 60 % en poids de la poudre de carbure de silicium.

**4.** Procédé pour la préparation d'un corps fritté intégralement assemblé de carbure de silicium, selon la revendication 3, selon lequel l'agent liant pâteux comprend essentiellement de 20 à 70 % en poids de la résine thermodurcissable, de 5 à 30 % en poids de la poudre de carbone et de 30 à 60 % en poids de la poudre de carbure de silicium.

**5.** Procédé pour la préparation d'un corps fritté intégralement assemblé de carbure de silicium selon la revendication 1, dans lequel la seconde résine thermodurcissable est choisie dans le groupe comprenant les résines phenoliques, les résines epoxy, les résines de silicone, les résines de polyester, les résines de furanne et les résines de mélamine.

**6.** Procédé pour la préparation d'un corps fritté intégralement assemblé de carbure de silicium selon la revendication 1, dans lequel le chauffage du corps intégralement assemblé dans l'étape e) est exécuté alors que le corps intégralement assemblé est au contact du silicium fondu.

# FIG. 1

# FIG. 2

# FIG. 3